# EUROPEAN PATENT SPECIFICATION

(11) **EP 4 122 679 B1**
(45) Date of publication and mention of the grant of the patent: **08.07.2026**
(21) Application number: 21186926.8
(22) Date of filing: 21.07.2021
(51) Int. Cl.: B29C 65/02, B29C 65/08, B29C 65/14, B29C 65/18, B29C 65/26, B29K 101/12, B29K 105/06

(54) **WELDING APPARATUS FOR AND METHOD OF WELDING THERMOPLASTIC COMPONENTS**
SCHWEISSVORRICHTUNG UND SCHWEISSVERFAHREN FÜR THERMOPLASTISCHE BAUTEILE
APPAREIL DE SOUDAGE ET PROCÉDÉ DE SOUDAGE DE COMPOSANTS THERMOPLASTIQUES

(43) Date of publication of application: 25.01.2023
(73) Proprietor: Airbus Operations GmbH, 21129 Hamburg (DE)
(72) Inventor: Schwickert, Jörg, 21129 Hamburg (DE); Köhler, Filipp, 21129 Hamburg (DE)
(74) Representative: Schornack, Oliver

(56) References cited:
- DE-A1- 102020 126 667
- FR-A1- 2 869 042

## Description

The invention relates to a welding apparatus and method of welding thermoplastic components to one another. Particularly, the invention relates to a welding apparatus and welding method employing a die covering a side face of one thermoplastic component and contacting the other thermoplastic component.

The welding of thermoplastic components, particularly thermoplastic composite components, is usually done by heating the components, applying a static pressure and consolidating both components to be welded. The pressure is required to slightly move both components together, so that the thermoplastic material of both components, once melted due to the heat, merges and blends into each other.

However, it has been found that at least due to the application of pressure a small portion of thermoplastic material (also referred to as "polymer") is squeezed out at an end of the interface of both to be welded components. Thus, a void may be formed in the welded components. As the consolidation force (pressure) is also locally reduced due to the squeezed out polymer partial at the consolidation of the two components may occur.

In addition, in case of a fibre reinforced thermoplastic composite some of the fibres can also be squeezed out at an end of the interface of both to be welded components depending on the thickness of the layer of melted polymer. This may lead to distorted fibres and a decreased mechanical performance of the components, since the fibres are no longer in the desired direction and/or are not properly embedded in the thermoplastic material.

Furthermore, DE 10 2020 126 667 A1 relates to an apparatus and method for sealing a load bearing plastic joint connection. The apparatus includes a plasticizing and conveying module for sealing material and a sealing tool. The joint connection can connect a first joining part and a second joining part each having joining surfaces facing and/or abutting one another, wherein the first and second joining parts can be a fibre plastic composite. The sealing material comprises reinforcing fibres that can be intertwined and/or interlaced with the fibres of the joint connection. The sealing tool has a moulding section for moulding the seal, so that the seal extends along an edge between the fibre plastic composite joining parts and fills the edge with a ramp-shaped or wedge-shaped cross-section.

FR 2 869 042 A1 relates to a bonding intermediate for textile sheets with a silicone-based polymeric coating, having the form of a strip including a non-cross-linked silicone elastomer fraction present on at least the external sides of the strip and including heat energy dissipating elements embedded in the non-cross-linked silicon elastomer. Under heat and pressure and emitted infrared light the joining area is formed. The pressing element has two parallel and offset plane zones coming into contact with two distinct regions of the bonding zones of the to-be-bonded textile sheets. An inclined offset is defined between the offset plane zones, in which the non-cross-linked silicon elastomer can flow

It is therefore an object of the invention to overcome the found and above-noted drawbacks and to provide a welding apparatus and method that enhances welding of thermoplastic components to one another.

This object is achieved by a welding apparatus with the features of claim 1, and a method with the features of claim 9.

Preferred embodiments are defined by the dependent claims.

According to a first exemplary aspect to better understand the present disclosure, a welding apparatus for welding thermoplastic components to one another comprises a welding device configured to melt at least an interface between a first one of the thermoplastic components and a second one of the thermoplastic components, and a die configured to press an edge region of the first thermoplastic component onto the second thermoplastic component. The welding device is an ultrasonic welding sonotrode.

In addition, the die has an extension covering a side face of the first thermoplastic component at the edge region and the extension contacts the second thermoplastic component. The edge region of the first thermoplastic component is a portion of the first thermoplastic component in a boundary area thereof, i.e. along an edge, where the first thermoplastic component ends. This may be at one side of the first thermoplastic component as well as at a corner of two sides of the first thermoplastic component.

It is to be noted that the first thermoplastic component at least in the area where it is welded to the second thermoplastic component, i.e. the area formed by the interface between the first and second thermoplastic components, can be larger than in a direction perpendicular to the interface (also referred to as the thickness direction of the first thermoplastic component). The side face of the first thermoplastic component is, hence, a surface of the first thermoplastic component extending in the thickness direction and along the edge (boundary) of the first thermoplastic component, wherein the edge delimits the side face. The interface with the second thermoplastic component is delimited by another edge (boundary) of the first thermoplastic component also delimiting the side face.

Since the extension of the die covers the side face of the first thermoplastic component and contacts the second thermoplastic component, the end of the interface between first and second thermoplastic component is closed by the extension. Thus, the squeeze out of melted thermoplastic material is avoided or at least reduced. In case a small amount of melted thermoplastic material is squeezed out at the interface, the extension can seal (the open end of) the weld line. That is, the squeezed out melted thermoplastic material is spread by the extension over the weld line, e.g., over the end of the interface along the side face of the first thermoplastic component. This provides protection against environmental influences, such as due to water and/or chemical ingress.

Moreover, any fibres of the first and/or second thermoplastic component are stabilised by the extension, so that they cannot be squeezed out in an area of the interface of the first and second thermoplastic component. Even if the fibres in the melted thermoplastic material are moved during welding, a squeezed out melted thermoplastic material is spread by the extension over these fibres. This allows high quality structures of welded thermoplastic components with improved weld seam and leads to a more uniform weld quality.

In an implementation variant, at least a portion of the extension can be configured to solidify the melted thermoplastic material, particularly any squeezed out material. For instance, a surface of the extension may be cold enough to solidify the melted polymer. Of course, at least the portion of the extension contacting the melted thermoplastic material may be actively cooled, i.e. temperature controlled, for example by a temperature control device. Such temperature control device may be operated with a cooling fluid and/or an electrical cooling element.

In another implementation variant, at least a portion of the extension can be made from a metal or a ceramic material. These materials are thermally conductive, which facilitates active cooling thereof, and can have a smooth surface achieving a smooth sealed weld seam.

In yet another implementation variant, at least a portion of the extension can be actively heated, for example, by a temperature control device, in order to achieve a uniform temperature of the first and second thermoplastic components in an area that is to be welded. This improves diffusion of the polymer molecules at the weld seam. Such temperature control device may be operated with a heating fluid and/or an electrical heating element.

In a further implementation variant, the welding apparatus can further comprise a flexible pressing device configured to press the die onto the first and/or second thermoplastic component. The pressing device, for example, acts on an end of the die opposite to a surface of the die contacting the first and/or a second thermoplastic component. Thus, the first thermoplastic component can be mechanically secured to the second thermoplastic component, so that they do not move relative to one another before and while welding.

In addition, the pressing device can be configured to adjust the force applied onto the first thermoplastic component, so that a consolidation pressure is applied at the interface of the first and second thermoplastic components, which allows a minimum polymer flow at the melted surfaces of the first and second thermoplastic components.

Furthermore, the pressing device can be configured to have a certain flexibility. Particularly, the pressing device may be flexible parallel to a direction of the force applied by the pressing device onto the first and/or second thermoplastic component. This allows moving the pressing device (for example together with the welding apparatus) over the first and second thermoplastic components along a surface of the first and/or second thermoplastic components (i.e. substantially perpendicular to the direction of the force applied by the pressing device), and further allows accommodating to different thicknesses of the first and/or second thermoplastic components.

For example, the pressing device can comprise a bladder or piston, which allow movement of the pressing device along or parallel to the direction of the applied force. Thus, the die, or at least a portion thereof, can tolerate any uneven part on the first and/or second thermoplastic components, while maintaining the required consolidation pressure.

In yet a further implementation variant, the die can be separated into a plurality of die portions each configured to move relative to the other die portions in a direction parallel to the pressure applied by the die onto the first and second thermoplastic components. Such die can better adapt to the surface of the first and/or second thermoplastic component, particularly can better adapt to varying thicknesses of adjacent portions of the first and/or second thermoplastic components. Each die portion, hence, can move up and down depending on the thickness and/or surface property of the first and/or second thermoplastic component.

In a particular implementation variant, the extension of the die can be separated into the plurality of die portions. In other words, only the extension of the die is separated into a plurality of portions. Of course, any other part of the die excluding the extension can be separated into the plurality of die portions. Likewise, the entire die may be separated into the plurality of die portions.

In an implementation variant, the welding device, being an ultrasonic welding sonotrode, allows introducing ultrasonic (high-frequency) vibrations into the first and/or a second thermoplastic components. Such vibrations cause boundary friction at the surfaces at the interface of the first and second thermoplastic components, so that the surfaces heat and melt. The applied pressure induced by the die achieves a uniform diffusion of the polymer molecules at the weld seam. Ultrasonic welding further allows faster weld times, since only small portions of the thermoplastic material is to be melted and, hence, has to be cooled afterwards.

In an implementation variant, in addition to the ultrasonic welding sonotrode, the welding device can further comprise a heat source configured to radiate or conduct heat into the first and/or second thermoplastic components. Such heat source allows achieving a uniform temperature distribution in the first and second thermoplastic components.

Furthermore, the heat source can be configured to not melt the thermoplastic material, but only warm the first and/or second thermoplastic component, while the welding and, hence, melting is achieved by another welding device, such as the ultrasonic sonotrode.

In another implementation variant, the welding apparatus can further comprise a moving device configured to move the welding apparatus relative to the first and second thermoplastic components. Such moving device allows longitudinal weld seams along a certain path. For instance, the weld seam may be made along a straight line or may be curved or may consist of a plurality of straight lines adjacent one another forming a weld area.

In a further implementation variant, the extension of the die can have a cavity at a corner configured to be arranged in a region between the side face of the first thermoplastic component and the second thermoplastic component. In other words, a corner between the side face of the first thermoplastic component and the second thermoplastic component at their interface is not contacted by the extension of the die due to the cavity. For instance, the extension may be chamfered at the corner of two sides of the extension contacting the side face of the first thermoplastic component and a surface of the second thermoplastic component, respectively. Such cavity allows any melted thermoplastic material, such as the one squeezed out during welding, to fill the corner between the side face of the first thermoplastic component and the second thermoplastic component. Thus, the weld seam at the end of the interface can be sealed with a fillet.

In yet another implementation variant, the welding device and a first portion of the die can be combined in an integrated device. Thus, a compact welding apparatus can be built, wherein the welding device can even be employed in the edge region, i.e. close to or directly on the boundary of the first thermoplastic component.

Optionally, a second portion of the die can form or include the extension. The second portion may be fixed to the first portion of the die or may be movable with respect to the first portion, so that any differences in the thickness direction of the first and second thermoplastic components can be levelled or compensated.

According to a second exemplary aspect to better understand the present disclosure, a method of welding thermoplastic components to one another comprises pressing a die onto an edge region of a first one of the thermoplastic components towards a second one of the thermoplastic components, and heating by an ultrasonic welding sonotrode at least an interface between the first and second thermoplastic components to a melting temperature of the respective material of the first and second thermoplastic components. The method further comprises placing an extension of the die next to a side face of the first thermoplastic component at the edge region and onto the second thermoplastic component. Placing the extension next to the side face of the first thermoplastic component reduces a squeeze out of melted thermoplastic material, stabilises any fibres in the first and/or second thermoplastic component and/or seals the weld seam, particularly at an end of the interface of the first and second thermoplastic components.

In an implementation variant, the heating can comprise heating the first and second thermoplastic components by applying ultrasonic waves from the ultrasonic welding sonotrode at least into the first thermoplastic component. The application of ultrasonic waves may be adjusted in such a manner, that the surfaces of the first and second thermoplastic components rub against each other due to the ultrasonic vibrations. The dry friction creates heat until the surfaces melt, so that they can be welded together by pressing the die onto at least the first thermoplastic component.

In an implementation variant, a further heat source can be employed to heat up the material of the first and second thermoplastic components. This facilitates melting of the thermoplastic material.

In another implementation variant, the method can further comprise providing an energy director at the interface between the first and second thermoplastic components. The energy director can consist of the same material/polymer as the welding partners, i.e. the first and second thermoplastic components. The energy director can be configured to melt before the surface of the first and/or second thermoplastic component, so that melted material is provided at the interface of first and second thermoplastic components at the beginning of the welding process. This facilitates heat distribution and heat ingress into the surfaces of the first and/or second thermoplastic components.

For instance, the energy director can be a thin sheet of thermoplastic material laid between the first and second thermoplastic components. Alternatively, the energy director may be formed on a surface of the first and/or second thermoplastic components.

Alternatively or additionally, the energy director may include or be (dot-like, longitudinal, curved, etc.) protrusions formed on the surface of the sheet or on the surface of the first and/or second thermoplastic component. Since the force applied by the die acts on these protrusions, the protrusions will melt first and initiate welding.

In yet another implementation variant, the method can further comprise moving at least the die along the edge region of the first thermoplastic component, wherein the placing of the extension of the die comprises sliding the extension of the die along the side face of the first thermoplastic component and along the second thermoplastic component. Thus, a longitudinal or curved weld seam may be achieved, such as along an edge (boundary) of the first thermoplastic component. Depending on the welding device, only the die can be moved, if the welding device achieves a greater area of melting thermoplastic material in the first and second thermoplastic components. The moving die then solely applies the necessary welding pressure, including distribution and diffusion of the melted polymers, and sealing of the interface end between first and second thermoplastic components by the extension.

Of course, in an implementation variant, the die and welding device can be moved together. An associated welding apparatus, hence, can be kept small in the direction of movement. The welding apparatus can actually be built to perform spot welding, while moving the die and welding device achieves an elongated weld seam.

The present disclosure is not restricted to the aspects and variants in the described form and order. Specifically, the description of aspects and variants is not to be understood as a specific limiting grouping of features. It is to be understood that the present disclosure also covers combinations of the aspects and variants not explicitly described. Thus, each described variant or optional feature can be combined with any other described aspect, variant, optional feature or even combinations thereof. Preferred embodiments of the invention are now explained in greater detail with reference to the enclosed schematic drawings, in which
- Figure 1: schematically illustrates a cross section of an exemplary welding apparatus and components to be welded;
- Figure 2: schematically illustrates a cross section of another exemplary welding apparatus and components to be welded;
- Figure 3: schematically illustrates a cross section along a moving direction of an exemplary welding apparatus and components to be welded; and
- Figure 4: illustrates an exemplary flow diagram of a method of welding thermoplastic components.

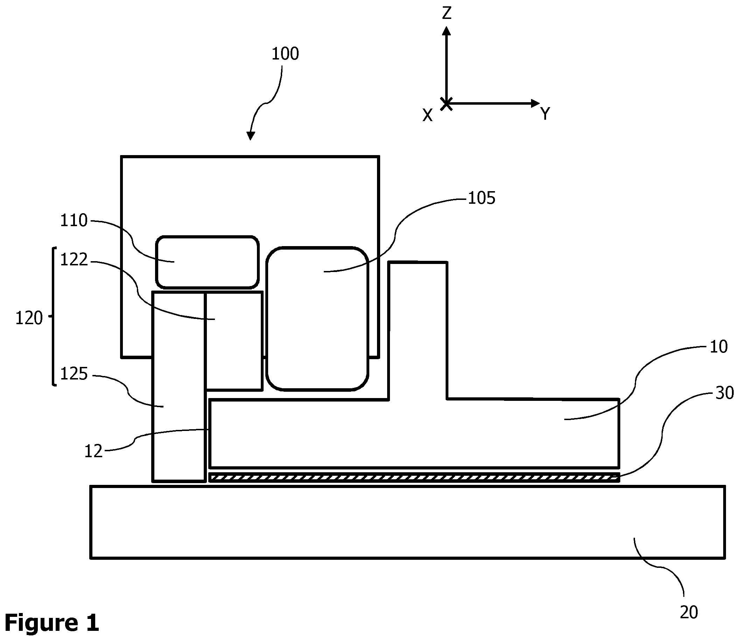

Figure 1 schematically illustrates a cross section of an exemplary welding apparatus 100. The welding apparatus 100 is employed to weld a first thermoplastic component 10 to a second thermoplastic component 20. For instance the first and second components 10, 20 may be thermoplastic components with or without fibre reinforcement. The components 10, 20 can be welded to one another by heating and melting the thermoplastic material (polymer) at least at the surfaces of the first and second components 10, 20 contacting one another and to be welded to one another. By melting the thermoplastic material, the polymer molecules of the first and second components 10, 20 will merge and interlock with one another, so that the two components 10, 20 are welded.

The welding apparatus 100 comprises a welding device 105 configured to melt at least an interface between a first thermoplastic component 10 and a second thermoplastic component 20. The welding device 105 can include a heat source which radiates and/or conducts heat into one of the components 10, 20. Here the upper component is the first component 10, so that the heating welding device 105 heats the thermoplastic material of the first component 10 entirely in a thickness direction (Z-axis), and at least a portion of the second component 20. For example, a surface of the second component 20 at an interface between the first and second components 10, 20 can be heated and melted to achieve welding both surfaces at the interface of the first and second components 10, 20.

According to the claimed invention, the welding device 105 comprises an ultrasonic welding device 105, such as a sonotrode. Such a sonotrode emits ultrasonic high-frequency waves into the first and second components 10, 20. Due to dry friction at the surfaces of the first and second components 10, 20 contacting one another, the surfaces (in the interface region) heat up and melt, so that they can be welded.

It is to be understood that the welding apparatus 100 is not restricted to this type of welding devices 105, but also covers any welding device 105 that achieves at least a partial melting of the first and second components 10, 20 in the interface region of both components 10, 20.

In order to facilitate welding, an energy director 30 could be employed. For instance, the energy director 30 may comprise or be made of a thermoplastic material, preferably the same as the first component 10 and/or the second component 20. It can have the form of a sheet laid into the interface region between first and second components 10, 20. Optionally, the energy director 30 can include or be solely made of protruding elements (not illustrated) protruding in a thickness direction (Z axis) and being arranged in an area of the other directions (X and Y axes). Such protruding elements, particularly when using an ultrasonic sonotrode, would be subject to friction between the first and second components 10, 20, so that they would melt first and achieve a heat ingress into the respective surfaces of the first and second components 10, 20.

The welding apparatus 100 further comprises a die 120 configured to press at least an edge region of the first thermoplastic component 10 onto the second thermoplastic component 20. The pressure applied by the die 120 can be optimized for the welding of the first and second components 10, 20. For instance, the applied pressure may be controlled and set to an optimal welding pressure depending on the type of thermoplastic material. Due to the pressure, the melted surfaces of the first and second components 10, 20 are moved, which leads to a merging and interlocking of the thermoplastic polymer molecules.

The die 120 can comprise or solely consist of an extension 125, which covers a side face 12 of the first thermoplastic component 10 at the edge region and further contacts the second thermoplastic component 20. Preferably, the extension 125 contacts an upper surface of the second thermoplastic component 20, if the second component 20 extends in X-axis or Y-axis direction over the side face 12 of the first component 10. Alternatively, if the first and second components 10, 20 have continuous (flush) side faces (i.e., the second component 20 would end on the lefthand side in Figure 1 with the side face 12 of the first component 10, instead of the illustrated extending second component 20), the extension 125 may contact the second thermoplastic component 20 at such side face of the second component 20.

In any case, the extension 125 is arranged at an end of the interface between first and second components 10, 20 and closes this open end of the interface. Thus, while the first and second components 10, 20 are welded to one another, the open end of the interface is covered by the extension 125 and any melted thermoplastic material is blocked from flowing out by the extension 125. This facilitates closing the weld seam, particularly at the open end of the interface.

The die 120 as illustrated in Figure 1 comprises (is separated into) at least two portions, i.e. portion 122 and the extension 125. The two portions may be arranged, so that their respective lower ends (bottom end in Z axis direction) end at different heights. This gap or step between the portions of the die 120 may be set to the thickness of the first component 10 and/or may be adjustable in Z axis direction. Any portion 122, 125 of the die 120 allows pressing of the first component 10 onto the second component 20 and/or fixation of the first and/or second components 10, 20 with respect to one another. The different heights of the portions 122, 125 of the die 120 allow placing the extension 125 to the side face 12 of the first component 10 and open end of the interface.

The required pressing force of the die 120 may be achieved, controlled and/or supported by a flexible pressing device 110. For instance, the flexible pressing device 110 may be implemented in the form of a bladder, piston or spring pressing the die 120 in the Z axis direction, while allowing a certain movement of the die 120 or die portion 122, 125 in the same direction. Thus, the die can be adjusted to the thickness (height) of the first component 10 as well as a changing thickness of the first component 10 and energy director 30 before, during and after melting.

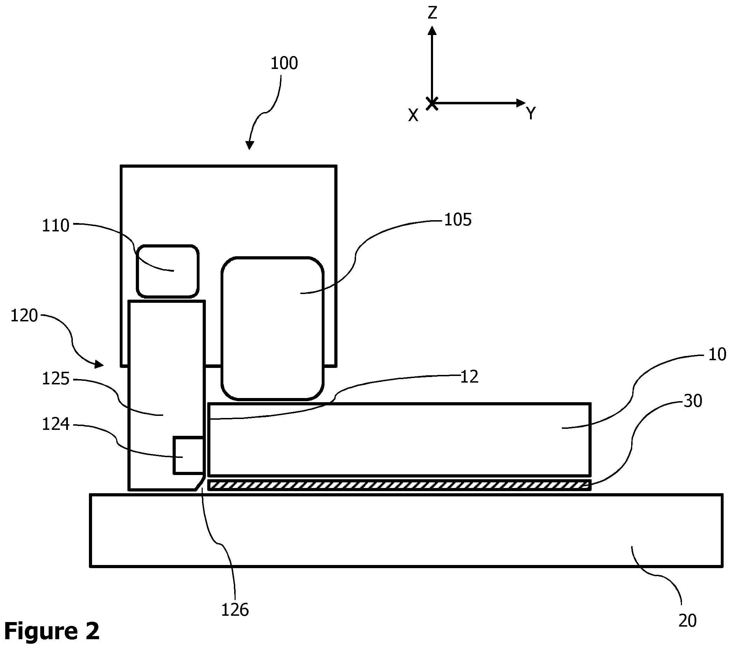

Figure 2 schematically illustrates a cross section of another exemplary welding apparatus 100 and thermoplastic components 10, 20 to be welded to one another. The features in Figure 2 being the same or having the same function as those illustrated in Figure 1 are indicated by the same reference signs, and their description is omitted to avoid repetitions.

The welding apparatus 100 of Figure 2 has a die 120 that is formed like the extension 125 of the welding apparatus 100 of Figure 1. Instead of having a separate portion 122 of the die 120 pressing on the first thermoplastic component 10, the welding apparatus 100 of Figure 2 includes a welding device 105 combined with a portion 122 of the die 120. Although welding device 105 and die 120 are illustrated as separate components in Figure 2, they can be built in an integrated manner, i.e. having a form as die 120 in Figure 1. In any case, the welding device 105 of Figure 2 can be configured to apply a pressure onto the first thermoplastic component 10 for fixation of first component 10 and for applying the required welding pressure (consolidation pressure of the polymer molecules).

The extension 125 may optionally have a cavity 126 at a corner configured to be arranged in a region between the side face 12 of the first thermoplastic component 10 and the second thermoplastic component 20. This cavity 126 allows a certain amount of melted thermoplastic polymer to flow out of the interface between first and second components 10, 20, but further seals the open end of the interface with a fillet. Particularly, if an energy director 30 is used, additional thermoplastic polymer is introduced, a small portion of which will be squeezed out when melted. This small portion of thermoplastic material can be used to seal the open end of the interface properly.

It is to be understood that the cavity 126 is only exemplarily illustrated as a chamfered corner of the extension 125. The cavity 126 can have any form, which allows forming the weld seam seal at the open end of the interface in any desired shape. Furthermore, if the extension 125 would further extend downwards in Figure 2 (not illustrated as the second component 20 extends over the side face 12 of the first component), particularly if first and second components 10, 20 would have the same or a quite similar length (in the Y-axis direction) with (almost) flush side faces, the cavity 126 would only be arranged in the area of the open end of the interface. In other words, the side face of the extension 125 (to the right in Figure 2) above and below the cavity 126 would the flush or would be stepped (both not illustrated) depending on the location of the respective side face of the first and second components 10, 20.

Another optional element of the welding apparatus 100 can be a temperature control device 124. For example, as illustrated, the temperature control device 124 can be installed in the die 120, particularly in the extension 125. The temperature control device 124 can be configured to cool or heat at least a portion of the extension 125. Heating the extension 125 allows facilitating the sealing of the open end of the interface as well as facilitating a uniform heat distribution in the material of the first and/or second thermoplastic components 10, 20. Cooling the extension 125 allows a controlled solidifying of the squeezed out thermoplastic material at the open end of the interface between first and second thermoplastic components 10, 20. The temperature control device 124 may be operated by a heating/cooling fluid and/or by an electrical heating/cooling element.

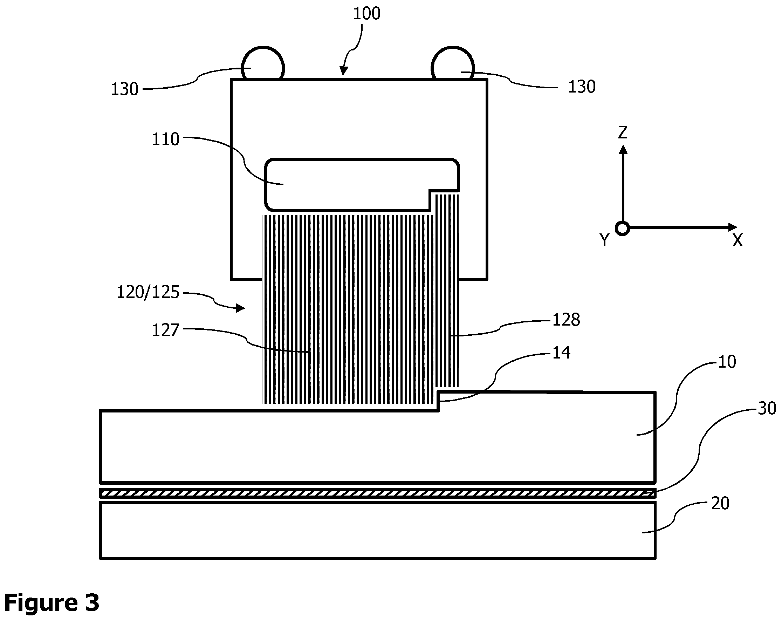

Figure 3 schematically illustrates a cross section along a moving direction (X axis direction) of an exemplary welding apparatus 100 and thermoplastic components 10, 20 to be welded to one another. This exemplary welding apparatus 100 shows a die 120 separated into a plurality of die portions 127, 128 also in the moving direction. The respective die portions 127, 128 can be configured to move relative to the other die portions 127, 128 in a direction parallel to the pressure applied by the die 120 (Z axis direction) onto the first and/or second thermoplastic components 10, 20.

Such separate die portions 127, 128 allow adaptation of the die to any unevenness of the first and/or second thermoplastic components 10, 20. Figure 3 illustrates a step 14 in or other uneven portion of the first thermoplastic component 10. If die 120 is moved, for example in the X axis direction (to the right in Figure 3), the rightmost portion(s) 128 of the die 120 can move upwards at the step 14 in the first component 10. The pressure on the first portion 10 can be maintained, so that a uniform pressure distribution is possible.

The flexible pressing device 110 is configured to compensate for the movement of the portion(s) 128 of the die 120, as illustrated in Figure 3. For instance, the pressing device 110 provides a certain flexibility, at least in the Z axis direction, to allow free movement of the portions 128 of the die 120 while maintaining the same pressure per area unit onto the first component 10. Of course, the portions 127 of the die 120 are also movable in the Z axis direction, once the die 120 has moved further in the X axis direction.

The welding apparatus 100 exemplarily illustrated in Figure 3 can optionally include moving device 130 configured to move the welding apparatus relative to the first and second thermoplastic components 10, 20. For example, the moving device 130 can be implemented simply as rollers 130 that roll along a rail or other guide. This allows achieving an elongated weld seam and further facilitates providing a compact welding apparatus 100, particularly a welding apparatus 100 that is short in the moving direction (X axis direction).

Alternatively, the moving device 130 can be a robot arm moving the welding apparatus 100 along any programmed path. Thus, the welding apparatus 100 can be moved along the interface between first and second thermoplastic components 10, 20 and particularly along the open end of the interface.

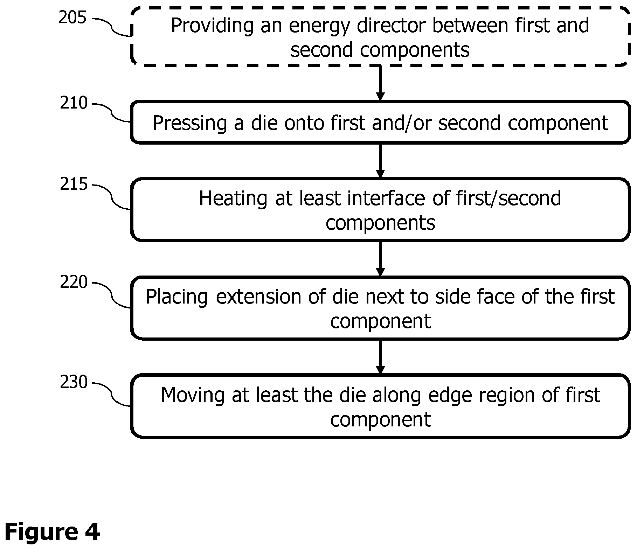

Figure 4 illustrates an exemplary flow diagram of a method of welding thermoplastic components 10, 20. Optionally, in step 205 an energy director may be provided between the first and a second thermoplastic components 10, 20.

With or without the energy director, a die 120 is pressed in step 210 onto the first thermoplastic component 10 and/or the second thermoplastic component 20. This achieves fixation of both components and further allows applying a required welding/consolidating pressure to weld the thermoplastic polymers of the first and second components 10, 20 together.

The welding is achieved in step 215 by heating at least an interface of the first component 10 and the second component 20 using an ultrasonic welding sonotrode. This includes heating at least the surfaces of the interface region of first and second components 10, 20 up to a melting temperature of the thermoplastic material (polymer), so that the polymer molecules can merge and combine with one another (interlock with one another).

The method further comprises in step 220 a placing of an extension 125 of the die 120 next to a side face 12 of the first component 10. The extension 125 placed next to the side face 12 of the first component 10 allows a proper sealing of the open end of the interface by avoiding, at least restricting or controlling the amount of melted polymer squeezed out of the open end of the interface, by stabilizing any fibres in the first and/or second components 10, 20 while the polymer is melted, and/or by sealing such fibres, if moved out of the open end of the interface or being distorted in a region of the interface, with the squeezed out melted thermoplastic material. It is to be understood that steps 210, 215 and 220 may be performed simultaneously, or step 220 may be performed before or after step 215.

In a step 230 at least the die 120 is moved along an edge region of the first thermoplastic component 10. At the same time the extension 125 may be slid along the side face 12 of the first component 10 and along the second thermoplastic component 20. Thus, spot welding can be performed by the welding apparatus 100, while the moving in step 230 allows provision of an elongated weld seam.

The above description of the drawings is to be understood as providing only an exemplary embodiment of the present invention and shall not limit the invention to this particular embodiment.

## Claims

1. A welding apparatus (100) for welding thermoplastic components to one another, the apparatus (100) comprising:
a welding device (105) configured to melt at least an interface between a first one (10) of the thermoplastic components and a second one (20) of the thermoplastic components; and
a die (120) configured to press an edge region of the first thermoplastic component (10) onto the second thermoplastic component (20),
**characterised in that**
the welding device (105) is an ultrasonic welding sonotrode,
the die (120) has an extension (125) covering a side face (12) of the first thermoplastic component (10) at the edge region and contacting the second thermoplastic component (20), and
the extension (125) of the die (120) is configured to spread squeezed out melted thermoplastic material of the first thermoplastic component (10) over the side face (12) of the first thermoplastic component (10).

2. The welding apparatus (100) according to claim 1, further comprising:
a temperature control device (124) configured to cool or heat at least a portion of the extension (125).

3. The welding apparatus (100) according to claim 1 or 2, further comprising:
a flexible pressing device (110) configured to press the die (120) onto the first and/or second thermoplastic component (10, 20).

4. The welding apparatus (100) according to one of claims 1 to 3, wherein the die (120) is separated into a plurality of die portions (122, 125, 127, 128) each configured to move relative to the other die portions (122, 125, 127, 128) in a direction parallel to the pressure applied by the die (120) onto the first and/or second thermoplastic components (10, 20).

5. The welding apparatus (100) according to claim 4, wherein the extension (125) of the die (120) is separated into the plurality of die portions (127, 128).

6. The welding apparatus (100) according to one of claims 1 to 5, further comprising:
a moving device (130) configured to move the welding apparatus (100) relative to the first and second thermoplastic components (10, 20).

7. The welding apparatus (100) according to one of claims 1 to 6, wherein the extension (125) of the die (120) has a cavity (126) at a corner configured to be arranged in a region between the side face (12) of the first thermoplastic component (10) and the second thermoplastic component (20).

8. The welding apparatus (100) according to one of claims 1 to 7, wherein the welding device (105) and a first portion (122) of the die (120) are combined in an integrated device, and wherein a second portion (125) of the die (120) forms or includes the extension (125).

9. A method of welding thermoplastic components to one another, the method comprising:
pressing (210) a die (120) onto an edge region of a first one (10) of the thermoplastic components towards a second one (20) of the thermoplastic components;
**characterised by**
heating (215), by an ultrasonic welding sonotrode (105), at least an interface between the first and second thermoplastic components (10, 20) to a melting temperature of the respective material of the first and second thermoplastic components,
placing (220) an extension (125) of the die (120) next to a side face of the first thermoplastic component (10) at the edge region and onto the second thermoplastic component (20); and
spreading, by the extension (125) of the die (120), squeezed out melted thermoplastic material of the first thermoplastic component (10) over the side face (12) of the first thermoplastic component (10).

10. The method according to claim 9, wherein the heating (215) comprises heating the first and second thermoplastic components (10, 20) by applying ultrasonic waves from the ultrasonic welding sonotrode at least into the first thermoplastic component (10).

11. The method according to claim 9 or 10, further comprising:
providing (205) an energy director (30) at the interface between the first and second thermoplastic components (10, 20).

12. The method according to one of claims 9 to 11, further comprising:
moving (230) at least the die (120) along the edge region of the first thermoplastic component (10), wherein the placing (220) of the extension (125) of the die (120) comprises sliding the extension (125) of the die (120) along the side face (12) of the first thermoplastic component (10) and along the second thermoplastic component (20).

## Patentansprüche

1. Schweißvorrichtung (100) zum Verschweißen thermoplastischer Bauteile miteinander, wobei die Vorrichtung (100) Folgendes umfasst:
ein Schweißgerät (105), das dazu ausgelegt ist, mindestens eine Grenzfläche zwischen einem ersten (10) der thermoplastischen Bauteile und einem zweiten (20) der thermoplastischen Bauteile zu schmelzen; und
eine Pressform (120), die dazu ausgelegt ist, einen Randbereich des ersten thermoplastischen Bauteils (10) auf das zweite thermoplastische Bauteil (20) zu pressen,
**dadurch gekennzeichnet, dass**
das Schweißgerät (105) eine Ultraschallschweißsonotrode ist,
die Pressform (120) eine Verlängerung (125) aufweist, die eine Seitenfläche (12) des ersten thermoplastischen Bauteils (10) an dem Randbereich bedeckt und mit dem zweiten thermoplastischen Bauteil (20) in Kontakt kommt, und
die Verlängerung (125) der Pressform (120) dazu ausgelegt ist, ausgedrücktes geschmolzenes thermoplastisches Material des ersten thermoplastischen Bauteils (10) über die Seitenfläche (12) des ersten thermoplastischen Bauteils (10) zu verteilen.

2. Schweißvorrichtung (100) nach Anspruch 1, ferner umfassend:
eine Temperatursteuervorrichtung (124), die dazu ausgelegt ist, mindestens einen Teil der Verlängerung (125) zu kühlen oder zu erwärmen.

3. Schweißvorrichtung (100) nach Anspruch 1 oder 2, ferner umfassend:
eine flexible Pressvorrichtung (110), die dazu ausgelegt ist, die Pressform (120) auf das erste und/oder zweite thermoplastische Bauteil (10, 20) zu pressen.

4. Schweißvorrichtung (100) nach einem der Ansprüche 1 bis 3, wobei die Pressform (120) in mehrere Pressformabschnitte (122, 125, 127, 128) getrennt ist, die jeweils dazu ausgelegt sind, sich relativ zu den anderen Pressformabschnitten (122, 125, 127, 128) in einer Richtung parallel zu dem durch die Pressform (120) auf das erste und/oder zweite thermoplastische Bauteil (10, 20) ausgeübten Druck zu bewegen.

5. Schweißvorrichtung (100) nach Anspruch 4, wobei die Verlängerung (125) der Pressform (120) in die mehreren Pressformabschnitte (127, 128) getrennt ist.

6. Schweißvorrichtung (100) nach einem der Ansprüche 1 bis 5, ferner umfassend:
eine Bewegungsvorrichtung (130), die dazu ausgelegt ist, die Schweißvorrichtung (100) relativ zu dem ersten und dem zweiten thermoplastischen Bauteil (10, 20) zu bewegen.

7. Schweißvorrichtung (100) nach einem der Ansprüche 1 bis 6, wobei die Verlängerung (125) der Pressform (120) einen Hohlraum (126) an einer Ecke aufweist, der dazu ausgelegt ist, in einem Bereich zwischen der Seitenfläche (12) des ersten thermoplastischen Bauteils (10) und des zweiten thermoplastischen Bauteils (20) angeordnet zu werden.

8. Schweißvorrichtung (100) nach einem der Ansprüche 1 bis 7, wobei das Schweißgerät (105) und ein erster Abschnitt (122) der Pressform (120) in einer integrierten Vorrichtung kombiniert sind und wobei ein zweiter Abschnitt (125) der Pressform (120) die Verlängerung (125) bildet oder beinhaltet.

9. Verfahren zum Verschweißen thermoplastischer Bauteile miteinander, wobei das Verfahren Folgendes umfasst:
Pressen (210) einer Pressform (120) auf einen Randbereich eines ersten (10) der thermoplastischen Bauteile auf ein zweites (20) der thermoplastischen Bauteile;
**gekennzeichnet durch**
Erwärmen (215), durch eine Ultraschallschweißsonotrode (105), mindestens einer Grenzfläche zwischen dem ersten und der zweiten thermoplastischen Bauteil (10, 20) auf eine Schmelztemperatur des jeweiligen Materials des ersten und des zweiten thermoplastischen Bauteils,
Platzieren (220) einer Verlängerung (125) der Pressform (120) neben einer Seitenfläche des ersten thermoplastischen Bauteils (10) an dem Randbereich und auf das zweite thermoplastische Bauteil (20); und
Verteilen, durch die Verlängerung (125) der Pressform (120), von geschmolzenem thermoplastischem Material des ersten thermoplastischen Bauteils (10) über die Seitenfläche (12) des ersten thermoplastischen Bauteils (10).

10. Verfahren nach Anspruch 9, wobei das Erwärmen (215) das Erwärmen des ersten und zweiten thermoplastischen Bauteils (10, 20) durch Anwenden von Ultraschallwellen von der Ultraschallschweißsonotrode zumindest in das erste thermoplastische Bauteil (10) umfasst.

11. Verfahren nach Anspruch 9 oder 10, das ferner Folgendes umfasst:
Bereitstellen (205) eines Energierichters (30) an der Grenzfläche zwischen dem ersten und dem zweiten thermoplastischen Bauteil (10, 20).

12. Verfahren nach einem der Ansprüche 9 bis 11, das ferner Folgendes umfasst:
Bewegen (230) mindestens der Pressform (120) entlang des Randbereichs des ersten thermoplastischen Bauteils (10), wobei das Platzieren (220) der Verlängerung (125) der Pressform (120) das Gleiten der Verlängerung (125) der Pressform (120) entlang der Seitenfläche (12) des ersten thermoplastischen Bauteils (10) und entlang des zweiten thermoplastischen Bauteils (20) umfasst.

## Revendications

1. Appareil de soudage(100) pour souder des composants thermoplastiques entre eux, l'appareil(100) comprenant:
un dispositif de soudage(105) configuré pour faire fondre au moins une interface entre un premier(10) des composants thermoplastiques et un second(20) des composants thermoplastiques; et
une matrice(120) configurée pour presser une région de bord du premier composant thermoplastique(10) sur le second composant thermoplastique(20),
**caractérisé en ce que**
le dispositif de soudage(105) est une sonotrode de soudage à ultrasons,
la matrice(120) a une extension(125) recouvrant une face latérale(12) du premier composant thermoplastique(10) au niveau de la région de bord et venant en contact avec le second composant thermoplastique(20), et
l'extension(125) de la matrice(120) est configurée pour étaler de la matière thermoplastique fondue comprimée du premier composant thermoplastique(10) sur la face latérale(12) du premier composant thermoplastique(10).

2. Appareil de soudage(100) selon la revendication1, comprenant en outre:
un dispositif de commande de température(124) configuré pour refroidir ou chauffer au moins une partie de l'extension(125).

3. Appareil de soudage(100) selon la revendication1 ou 2, comprenant en outre:
un dispositif de pression souple(110) configuré pour presser la matrice(120) sur le premier et/ou le second composant thermoplastique(10, 20).

4. Appareil de soudage(100) selon l'une des revendications1 à 3, dans lequel la matrice(120) est séparée en une pluralité de parties de matrice(122, 125, 127, 128) configurées chacune pour se déplacer par rapport aux autres parties de matrice(122, 125, 127, 128) dans une direction parallèle à la pression appliquée par la matrice(120) sur le premier et/ou le second composant thermoplastique(10, 20).

5. Appareil de soudage(100) selon la revendication4, dans lequel l'extension(125) de la matrice(120) est séparée en la pluralité de parties de matrice(127, 128).

6. Appareil de soudage(100) selon l'une des revendications1 à 5, comprenant en outre:
un dispositif de déplacement(130) configuré pour déplacer l'appareil de soudage(100) par rapport aux premier et second composants thermoplastiques(10, 20).

7. Appareil de soudage(100) selon l'une des revendications1 à 6, dans lequel l'extension(125) de la matrice(120) a une cavité(126) au niveau d'un coin configurée pour être agencée dans une région entre la face latérale(12) du premier composant thermoplastique(10) et du second composant thermoplastique(20).

8. Appareil de soudage(100) selon l'une des revendications1 à 7, dans lequel le dispositif de soudage(105) et une première partie(122) de la matrice(120) sont combinés dans un dispositif intégré, et dans lequel une seconde partie(125) de la matrice(120) forme ou inclut l'extension(125).

9. Procédé de soudage de composants thermoplastiques entre eux, le procédé comprenant:
le pressage(210) d'une matrice(120) sur une région de bord d'un premier(10) des composants thermoplastiques vers un second(20) des composants thermoplastiques;
**caractérisé par**
le chauffage(215), par une sonotrode de soudage à ultrasons(105), d'au moins une interface entre les premier et second composants thermoplastiques(10, 20) à une température de fusion du matériau respectif des premier et second composants thermoplastiques,
le placement(220) d'une extension(125) de la matrice(120) à côté d'une face latérale du premier composant thermoplastique(10) au niveau de la région de bord et sur le second composant thermoplastique(20); et
l'étalement, par l'extension(125) de la matrice(120), de matière thermoplastique fondue comprimée du premier composant thermoplastique(10) sur la face latérale(12) du premier composant thermoplastique(10).

10. Procédé selon la revendication9, dans lequel le chauffage(215) comprend le chauffage des premier et second composants thermoplastiques(10, 20) en appliquant des ondes ultrasonores à partir de la sonotrode de soudage à ultrasons au moins dans le premier composant thermoplastique(10).

11. Procédé selon la revendication9 ou 10, comprenant en outre:
la fourniture(205) d'un directeur d'énergie(30) au niveau de l'interface entre les premier et second composants thermoplastiques(10, 20).

12. Procédé selon l'une des revendications9 à 11, comprenant en outre:
le déplacement(230) d'au moins la matrice(120) le long de la région de bord du premier composant thermoplastique(10), dans lequel le placement(220) de l'extension(125) de la matrice(120) comprend le glissement de l'extension(125) de la matrice(120) le long de la face latérale(12) du premier composant thermoplastique(10) et le long du second composant thermoplastique(20).
